# EUROPEAN PATENT SPECIFICATION

(11) **EP 3 493 722 B1**
(45) Date of publication and mention of the grant of the patent: **23.06.2021**
(21) Application number: 17745193.7
(22) Date of filing: 02.08.2017
(51) Int. Cl.: A47J 37/06

(54) **AUTONOMOUS APPARATUS FOR COOKING FOOD, AND CORRESPONDING METHOD**
AUTONOME VORRICHTUNG ZUM KOCHEN VON LEBENSMITTELN UND ENTSPRECHENDES VERFAHREN
APPAREIL AUTONOME DE CUISSON D'ALIMENTS ET PROCÉDÉ CORRESPONDANT

(30) Priority: 05.08.2016 IT 201600082931
(43) Date of publication of application: 12.06.2019
(73) Proprietor: De' Longhi Appliances S.r.l. Con Unico Socio, 31100 Treviso (IT)
(72) Inventor: DE' LONGHI, Giuseppe, 31100 Treviso (IT); MAZZON, Renzo, 31057 Silea (IT)
(74) Representative: Petraz, Gilberto Luigi
(86) International application number: PCT/EP2017/069554
(87) International publication number: WO 2018/024782

(56) References cited:
- WO-A1-2010/012908
- WO-A1-2014/125200
- WO-A1-2016/113118
- CN-U- 202 341 751
- CN-U- 203 314 797

## Description

### FIELD OF THE INVENTION

The present invention concerns an autonomous apparatus for cooking food, comprising a support body, a lid and a container for the food that can be removed/inserted with respect to the support body.

The autonomous apparatus also comprises at least one heating device and at least one element to generate a flow of air to the food.

### BACKGROUND OF THE INVENTION

In the domestic environment, autonomous apparatuses for cooking food are known, comprising a support body and an internal container, selectively extractable, open at the top, and defining a cooking compartment.

The apparatus is also provided with a lid, possibly part of or associable with the support body, which can be closed on the internal container to create a cooking compartment having a controlled atmosphere suitable for the cooking to be carried out.

Furthermore, at least one heat energy producing device is normally present, disposed at the bottom and/or top of the internal container, which usually cooperates with one or more elements suitable to generate a flow of heated air to the container, so as to provide the desired contribution of heat energy to the food.

When the heating devices are disposed at the top of the internal container, they are normally associated with an aperture for sending the flow of air, localized in a portion of the lid, for example in proximity to the hinging position of the lid to the support body.

For the purposes of obtaining a proper and homogenous cooking of the food, it is important that the flow of hot air takes a certain path; that is, from the sending aperture, the flow of air must be distributed uniformly inside the container and between the food and then be removed through a return exit.

However, it often happens that, due to the conformation of the return exit and/or due to the position where it is installed, the flow of air is not taken to follow a path that passes through the food and that distributes the heat inside the cooking compartment homogeneously.

It also happens that the internal container acts as a barrier, preventing the flow of hot air from affecting the deepest layer of the food as well, and thus constraining the path made by the flow of air.

This leads to a very dis-homogeneous cooking of the food, with excessively cooked parts near the outlet of the flow of air, and uncooked parts away from it, as well as a disproportionate energy consumption compared to needs.

Document CN 202 341 751 describes an autonomous apparatus for cooking food comprising a support body, an openable lid, a container removable from/insertable into the support body and open at the top, at least one heating device and at least one element to generate a flow of air.

The air flow generator element is connected to a return exit located on an internal wall of the cooking chamber. The autonomous apparatus does not have any through holes in the internal container of the food, indeed the latter is not holed at any point. Therefore, the hot air entering into the cooking chamber affects the food only on the surface, since it is recalled by the return exit disposed in the upper part of the cooking chamber.

Document CN 203 314 797 describes an autonomous apparatus for cooking food having a container for the food that can be rotated from a substantially horizontal open position used for filling to a substantially vertical closed position used for heating and cooking. In the closed position, a gear system couples with holes present in the lateral wall of the container to make it rotate during cooking/heating. The autonomous apparatus comprises at least one heating device and at least one element to generate a flow of air which, with the container in the closed position, are disposed facing the front aperture of the container.

The container is provided with a second lid having through holes which, in two distinct portions of the second lid, allow the flow of air to enter into and exit from the container. The flow of air enters and exits substantially from the front portion of the container, and hence does not guarantee a homogeneous distribution over the whole internal volume of the container.

One purpose of the present invention is to obtain an autonomous apparatus for cooking food that allows to distribute the heat homogeneously inside the cooking compartment so as to make the heat contribution uniform to all the foods contained in the compartment itself.

Another purpose of the present invention is to obtain an autonomous apparatus for cooking food that optimizes the heat exchange, determining energy savings and allowing the optimum cooking of the food.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purposes, the present invention concerns an autonomous apparatus for cooking food comprising a support body, an openable lid which can be hinged to the support body, an internal container which can be extracted/inserted with respect to the support body and open at the top, at least one heating device and at least one element to generate a flow of air toward the inside of the internal container. The air flow generator element is connected to a return exit having a suction mouth made in correspondence with an internal wall of the support body.

According to one aspect of the present invention, the suction mouth cooperates with a plurality of through holes made on at least one portion of the lateral wall of the internal container. The through holes are present at least partly on the lateral wall, on a band near a peripheral edge disposed at the top of the lateral wall of the container.

According to one embodiment, the band with the through holes extends starting from the peripheral edge for 70%, advantageously 60%, of the height of the lateral wall.

According to a variant embodiment, the through holes are also made, on at least one portion of the base wall of the internal container.

Advantageously, the cooperation between the suction mouth and the through holes, present in at least part of the lateral wall and optionally the base wall of the internal container and comparable to forced circulation channels, allows the flow of hot air to pass through the food inside the container in a substantially complete manner, and to pass through the container itself, determining a continuity in the closed circuit for the recirculation of the flow of air.

Advantageously, in one solution of the invention, the through holes are made on a substantial part of the height of the internal container, and are distributed in overlapping and/or vertically aligned rows, parallel or staggered with respect to each other.

All the through holes can be the same size as each other, in a first solution, or the holes can be different in size from each other, for example, but not necessarily, smaller in the upper rows of the internal container and bigger in the lower rows, or vice versa.

The present invention also concerns a method to return a flow of heat conditioned air inside an autonomous apparatus for cooking food, which uses a return exit with a plurality of through holes made in a lateral internal portion of the internal container.

### BRIEF DESCRIPTION OF THE DRAWINGS

These and other characteristics of the present invention will become apparent from the following description of some embodiments, given as a non-restrictive example with reference to the attached drawings wherein:
- fig. 1 is a perspective view of an autonomous apparatus for cooking food;
- fig. 2 is a section view of the autonomous apparatus as in fig. 1;
- fig. 3 is another section view of the autonomous apparatus in fig. 1;
- fig. 4 is a section view of a detail of the autonomous apparatus in fig. 1;
- fig. 5 is a section view of the autonomous apparatus in one embodiment.

To facilitate comprehension, the same reference numbers have been used, where possible, to identify identical common elements in the drawings. It is understood that elements and characteristics of one embodiment can conveniently be incorporated into other embodiments without further clarifications.

### DETAILED DESCRIPTION OF SOME EMBODIMENTS

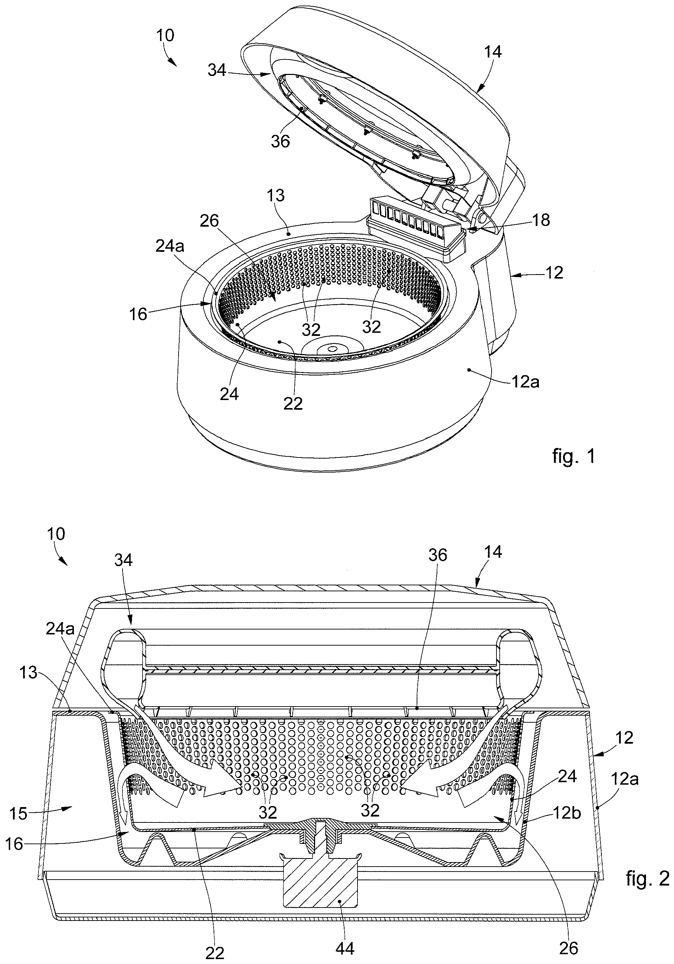

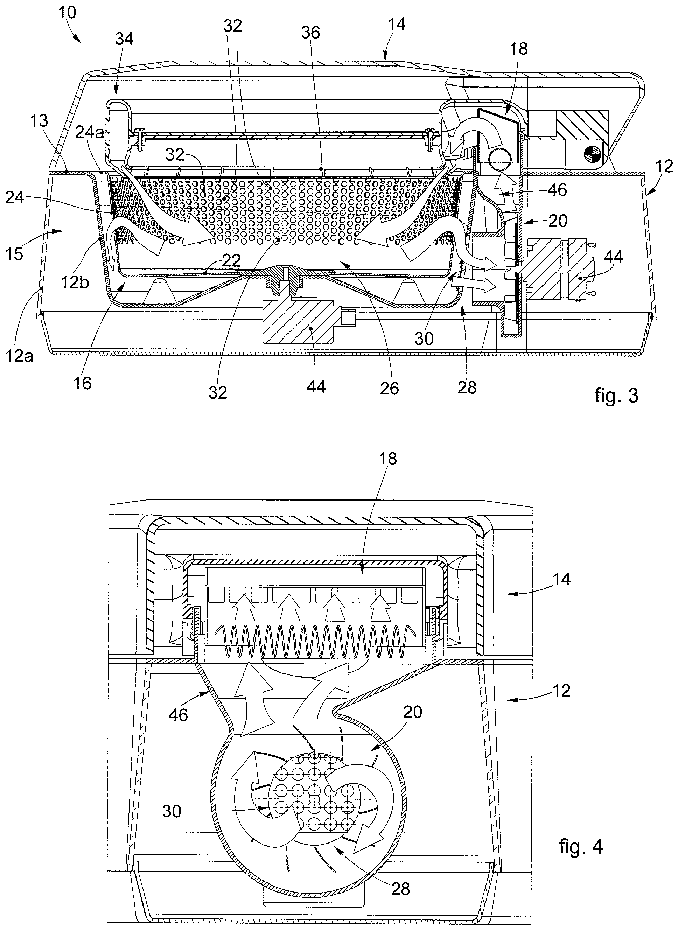

Embodiments described here in figs. 1-5 refer to an autonomous apparatus 10 for cooking foods, able to perform various cooking modes, such as stewing, brazing, boiling, roasting, frying, simple heating, sauteing, browning, slow cooking, or quick cooking in general.

The autonomous apparatus 10 comprises a support body 12, with which is associated an openable lid 14, an extractable/insertable internal container 16, open at the top and defining a cooking compartment 26 for food, at least one heating device 18 and at least one air flow generator element 20.

The support body 12 has an external wall 12a and an internal wall 12b, adjacent during use to the container 16.

Between the external wall 12a and the internal wall 12b there is an interspace 15 which can function as a technical compartment.

The support body 12 has an upper edge 13 which cooperates at least partly with a lower edge of the lid 14 when the latter is closed to cover the container 16.

The presence of the lid 14 is functional to create a controlled environment and conditions necessary for cooking the food.

The lid 14 can be made of the same material as the support body 12, or of a different material.

Advantageously, at least the lid 14 can be made of at least partly transparent material, to allow the user to view and thus control the cooking.

For example, the lid 14 can be made of a polymer or glass material.

The container 16 is defined by a base wall 22, which in this non-restrictive case is substantially circular, and by a lateral wall 24 connected to the base wall 22 and having a peripheral edge 24a.

The container 16 is configured to allow the association of one or more grips to allow to handle the container 16.

The base wall 22 can have a surface made with a plurality of configurations, for example conical, or hump-backed, more or less accentuated.

In a preferred embodiment, to which reference will be made hereafter, the base wall 22 has a substantially flat configuration.

The container 16 is open at the top to introduce food inside it and to allow the circulation of the flow of air from the heating device 18 to the food.

The generator element 20 of the flow of air is connected to a return exit 28 having a suction mouth 30 made in correspondence with the internal wall 12a.

The suction mouth 30 can be, for example, a through hole, or a grid.

The suction mouth 30 can be disposed at any point whatsoever of the internal wall 12b provided that it allows to determine a closed circuit of the flow of air.

According to a preferred formulation, the suction mouth 30 is positioned in correspondence with the air flow generator element 20.

The generator element 20 can be installed at any point whatsoever inside the interspace 15 provided that it allows to recirculate the flow of air.

The generator element 20 can be, for example, an axial, centrifugal or mixed axial/centrifugal fan, made to rotate by a drive member 44.

The return exit 28, when the lid 14 is closed on the container 16, cooperates with a plurality of through holes 32 made on at least one portion of the lateral wall 24 of the container 16.

According to one aspect of the invention, the through holes 32 are present at least partly on the lateral wall 24, on a band near the peripheral edge 24a, so as to allow to accommodate liquid or fluid foods.

In particular, the band with the through holes 32 extends starting from the peripheral edge 24a for 70%, advantageously 60%, of the height of the lateral wall 24.

In the embodiment shown in the drawings, the through holes 32 are substantially uniform, and disposed in substantially parallel vertical files, on a substantial part of the height of the lateral wall of the internal container 16.

This creates a substantially uniform flow of air from the inside to the outside of the container 16, which hits and therefore uniformly heats the food contained inside the container 16.

In some variants, not shown, through holes 32 can also be present on at least one portion of the base wall 22.

The through holes 32 can be in vertically aligned rows, as in the solution shown, or in horizontally aligned rows, or else have a random disposition covering a desired part of the lateral wall 24 or base wall 22 of the container 16.

It is advantageous to provide that the through holes 32, if present in the lateral wall 24, cover a substantial part of the height of the container 16, so that the flow of air is forcedly induced to hit, in a substantially uniform manner, all or at least a large part of the food in the container 16.

According to the present invention, the autonomous apparatus 10 comprises a sending aperture 34 to send the flow of air, installed on the lid 14.

According to the present invention, shown in figs. 1-3, the sending aperture 34 has a substantially hollow toroidal form which cooperates, when the lid 14 is closed on the container 16, with the peripheral edge 24a of the container 16.

The sending aperture 34 can have a circumferential slit 36 that allows the flow of air circulating in the toroidal cavity to escape from it, to be directed, when the lid 14 is at least partly closed, toward the inside of the container 16.

According to another embodiment, the sending aperture 34 can have a limited development and in proximity to the heating device 18.

The autonomous apparatus 10 comprises a recirculation pipe 46 which determines the connection between the generator element 20 and the heating device 18, in practice connecting the return exit 28 to the sending aperture 34.

According to embodiments described here, in the case where there is the sending aperture 34 with a toroidal shape it develops on a circumference with a smaller diameter than the peripheral edge 24a, in correspondence with the circumferential slit 36, to then increase and abut, with the lid 14 closed, in correspondence with the peripheral edge 24a.

In this way, the sending aperture 34, abutting against the circumferential edge 24a, creates a hermetic cooking compartment 26, constraining the flow of air to pass through the through holes 32.

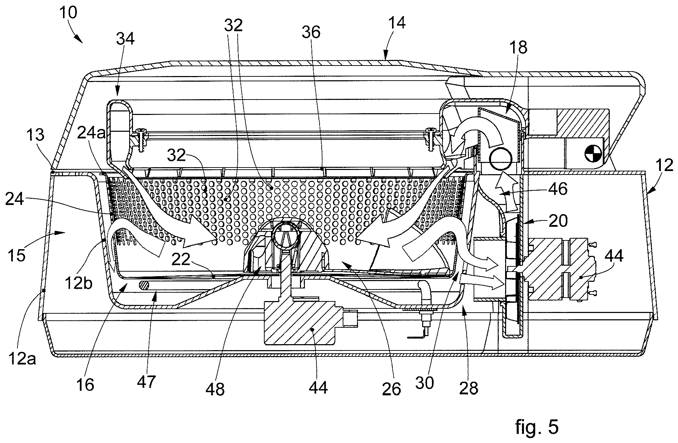

According to one embodiment, shown by way of example in fig. 5, the autonomous apparatus 10 can comprise an additional auxiliary heating device 47, or alternative to the heating device 18, for example installed in proximity to the base wall 22.

According to embodiments described here, the container 16 can be rotated around an axis of rotation, preferably in relation to the center of the base wall 22, by means of a drive member 44.

According to other embodiments described here, the autonomous apparatus 10 can comprise a mixing device 48 which is provided with at least one mixing blade, rotating with respect to the container 16 (fig. 5).

It is clear that modifications and/or additions of parts may be made to the autonomous apparatus 10 and corresponding method as described heretofore, without departing from the field and scope of the present invention.

It is also clear that, although the present invention has been described with reference to some specific examples, a person of skill in the art shall certainly be able to achieve many other equivalent forms of autonomous apparatus 10 and corresponding method, having the characteristics as set forth in the claims and hence all coming within the field of protection defined thereby.

## Claims

1. Autonomous apparatus for cooking food comprising:
- a support body (12), an openable lid (14) hinged to said support body (12), wherein the support body (12) has an external wall (12a) and an internal wall (12b),
- an internal container (16) which can be extracted/inserted with respect to said support body (12) and open at the top, wherein said internal wall (12b) is adjacent during use to said container (16);
- at least a heating device (18), one or more elements (20) to generate a flow of air toward the inside of said container (16), said air flow generator element (20) being connected to a return exit (28) with a suction mouth (30) made in correspondence with said internal wall (12b) of said support body (12) and determining a closed circuit of the flow of air, **characterized in that** said suction mouth (30) cooperates with a plurality of through holes (32) made on at least one portion of the lateral wall (24) of the internal container (16), said through holes (32) being present at least partly on said lateral wall (24) on a band near a peripheral edge (24a) disposed at the top of said lateral wall (24) of said container (16), and **in that** said apparatus comprises a sending aperture (34) configured to have a substantially hollow toroidal shape cooperating, when said lid (14) is in a closed position on said container (16), with a peripheral edge (24a) of said container (16) and communicating with the inside of said container (16).

2. Autonomous apparatus as in claim 1, **characterized in that** said band with said through holes (32) extends starting from said peripheral edge (24a) for 70%, advantageously 60%, of the height of said lateral wall (24).

3. Autonomous apparatus as in claim 1 or 2, **characterized in that** said through holes (32) are made on at least one portion of the base wall (22) of the internal container (16).

4. Autonomous apparatus as in any claim hereinbefore, **characterized in that** said through holes (32) are distributed in overlapping and/or vertically aligned rows.

5. Autonomous apparatus as in claim 4, **characterized in that** said overlapping rows are parallel or staggered with respect to each other.

6. Autonomous apparatus as in any claim hereinbefore, **characterized in that** said through holes (32) are the same size as each other.

7. Autonomous apparatus as in any claim hereinbefore up to claim 5, **characterized in that** said through holes (32) are different in size from each other.

8. Autonomous apparatus as in any claim hereinbefore, **characterized in that** said suction mouth (30) is positioned in correspondence with said air flow generator element (20).

9. Autonomous apparatus as in claim 1, **characterized in that** said sending aperture (34) has a circumferential slit (36) for said flow of air to exit, mating with the peripheral edge (24a) of said container (16).

10. Autonomous apparatus as in claim 9, **characterized in that** said sending aperture (34) develops on a circumference with a smaller diameter than said peripheral edge (24a) in correspondence with said circumferential slit (36), and then progressively increases.

11. Method to return a flow of air inside an autonomous apparatus (10) for cooking food as in claim 1, said apparatus comprising a support body (12), wherein the support body (12) has an external wall (12a) and an internal wall (12b), an openable lid (14) hinged to said support body (12), an internal container (16) which can be extracted/inserted with respect to said support body (12) and open at the top, wherein said internal wall (12b) is adjacent during use to said container (16), at least one heating device (18) and at least one element (20) to generate a flow of air toward the inside of said container (16), **characterized in that** it provides to:
- heat a flow of air by means of said heating device (18);
- make the flow of air pass through the food contained in said container (16) by means of a plurality of through holes (32) made on at least one portion of the lateral wall (24) of said container (16), said through holes (32) being present at least partly on said lateral wall (24), in particular on a band near a peripheral edge (24a) disposed at the top of said lateral wall (24) of said container (16);
- remove said flow of air exiting from said plurality of through holes (32) by means of a return exit (28) with a suction mouth (30) made in correspondence with an internal wall (12b) of said support body (12).

## Patentansprüche

1. Autonome Vorrichtung zum Kochen von Lebensmitteln, umfassend:
- einen Trägerkörper (12), einen öffenbaren Deckel (14), der an dem Trägerkörper (12) klappbar ist, wobei der Trägerkörper (12) eine Außenwand (12a) und eine Innenwand (12b) aufweist,
- einen inneren Behälter (16), der in Bezug auf den Trägerkörper (12) entnommen/eingesetzt werden kann und an der Oberseite offen ist, wobei die Innenwand (12b) bei der Verwendung an den Behälter (16) angrenzt;
- mindestens eine Heizeinrichtung (18) und ein oder mehrere Elemente (20) zum Erzeugen eines Luftstroms in Richtung des Innenraums des Behälters (16), wobei das Element (20) zum Erzeugen des Luftstroms mit einem Rückführausgang (28) mit einer Ansaugöffnung (30) verbunden ist, die mit der Innenwand (12b) des Trägerkörpers (12) korrespondierend ausgebildet ist und einen geschlossenen Kreislauf des Luftstroms bestimmt,
**dadurch gekennzeichnet, dass**
die Ansaugöffnung (30) mit einer Vielzahl von Durchgangslöchern (32) zusammenwirkt, die in mindestens einem Abschnitt der Seitenwand (24) des inneren Behälters (16) ausgebildet sind, wobei sich die Durchgangslöcher (32) zumindest teilweise an der Seitenwand (24) auf einem Band in der Nähe einer Umfangskante (24a) befinden, die an der Oberseite der Seitenwand (24) des Behälters (16) angeordnet ist, und **dadurch, dass** die Vorrichtung eine Sendeöffnung (34) umfasst, die so konfiguriert ist, dass diese eine im Wesentlichen hohle ringförmige Form aufweist, die, wenn sich der Deckel (14) in einer geschlossenen Position an dem Behälter (16) befindet, mit einer Umfangskante (24a) des Behälters (16) zusammenwirkt und mit dem Innenraum des Behälters (16) in Verbindung steht.

2. Autonome Vorrichtung nach Anspruch 1, **dadurch gekennzeichnet, dass** sich das Band mit den Durchgangslöchern (32) ausgehend von der Umfangskante (24a) über 70%, vorteilhafterweise 60%, der Höhe der Seitenwand (24) erstreckt.

3. Autonome Vorrichtung nach Anspruch 1 oder 2, **dadurch gekennzeichnet, dass** die Durchgangslöcher (32) in mindestens einem Abschnitt der Bodenwand (22) des inneren Behälters (16) ausgebildet sind.

4. Autonome Vorrichtung nach einem der vorhergehenden Ansprüche, **dadurch gekennzeichnet, dass** die Durchgangslöcher (32) in sich überlappenden und/oder vertikal ausgerichteten Reihen verteilt sind.

5. Autonome Vorrichtung nach Anspruch 4, **dadurch gekennzeichnet, dass** die überlappenden Reihen parallel oder versetzt zueinander angeordnet sind.

6. Autonome Vorrichtung nach einem der vorhergehenden Ansprüche, **dadurch gekennzeichnet, dass** die Durchgangslöcher (32) die gleiche Größe aufweisen.

7. Autonome Vorrichtung nach einem der vorhergehenden Ansprüche bis zu Anspruch 5, **dadurch gekennzeichnet, dass** die Durchgangslöcher (32) in ihrer Größe voneinander verschieden sind.

8. Autonome Vorrichtung nach einem der vorhergehenden Ansprüche, **dadurch gekennzeichnet, dass** die Ansaugöffnung (30) mit dem Element (20) zum Erzeugen des Luftstroms korrespondierend angeordnet ist.

9. Autonome Vorrichtung nach Anspruch 1, **dadurch gekennzeichnet, dass** die Sendeöffnung (34) einen umlaufenden Schlitz (36) für den Austritt des Luftstroms aufweist, der mit der Umfangskante (24a) des Behälters (16) zusammenpasst.

10. Autonome Vorrichtung nach Anspruch 9, **dadurch gekennzeichnet, dass** die Sendeöffnung (34) auf einem Umfang mit einem kleineren Durchmesser als der Umfangskante (24a) mit dem umlaufenden Schlitz (36) korrespondierend verläuft und dann progressiv zunimmt.

11. Verfahren zur Rückführung eines Luftstroms innerhalb einer autonomen Vorrichtung (10) zum Kochen von Lebensmitteln nach Anspruch 1, wobei die Vorrichtung einen Trägerkörper (12) umfasst, wobei der Trägerkörper (12) eine Außenwand (12a) und eine Innenwand (12b) aufweist, einen öffenbaren Deckel (14), der an dem Trägerkörper (12) klappbar ist, einen inneren Behälter (16), der in Bezug auf den Trägerkörper (12) entnommen/eingesetzt werden kann und an der Oberseite offen ist, wobei die Innenwand (12b) bei der Verwendung an den Behälter (16) angrenzt, mindestens eine Heizeinrichtung (18) und mindestens ein Element (20) zum Erzeugen eines Luftstroms in Richtung des Innenraums des Behälters (16),
**dadurch gekennzeichnet, dass** das Verfahren Folgendes vorsieht:
- Erwärmen eines Luftstromes mittels der Heizeinrichtung (18);
- Hindurchführen des Luftstromes durch das in dem Behälter (16) enthaltene Lebensmittel mittels einer Vielzahl von Durchgangslöchern (32), die in mindestens einem Abschnitt der Seitenwand (24) des Behälters (16) ausgebildet sind, wobei sich die Durchgangslöcher (32) zumindest teilweise an der Seitenwand (24), insbesondere auf einem Band in der Nähe einer Umfangskante (24a), die an der Oberseite der Seitenwand (24) des Behälters (16) angeordnet ist, befinden;
- Entfernen des aus der Vielzahl von Durchgangslöchern (32) austretenden Luftstroms mittels eines Rückführausgangs (28) mit einer Ansaugöffnung (30), die mit einer Innenwand (12b) des Trägerkörpers (12) korrespondierend ausgebildet ist.

## Revendications

1. Appareil autonome pour la cuisson d'aliments comprenant :
- un corps de support (12), un couvercle ouvrable (14) articulé sur ledit corps de support (12), dans lequel le corps de support (12) a une paroi externe (12a) et une paroi interne (12b),
- un récipient interne (16) qui peut être extrait/inséré par rapport audit corps de support (12) et ouvert au sommet, dans lequel ladite paroi interne (12b) est adjacente pendant l'utilisation audit récipient (16) ;
- au moins un dispositif de chauffage (18), un ou plusieurs éléments (20) pour générer un flux d'air vers l'intérieur dudit récipient (16), ledit élément générateur de flux d'air (20) étant relié à une sortie de retour (28) avec une bouche d'aspiration (30) réalisée en correspondance avec ladite paroi interne (12b) dudit corps de support (12) et déterminant un circuit fermé du flux d'air, **caractérisé en ce que** ladite bouche d'aspiration (30) coopère avec une pluralité de trous traversants (32) réalisés sur au moins une partie de la paroi latérale (24) du récipient interne (16), lesdits trous traversants (32) étant présents au moins partiellement sur ladite paroi latérale (24) sur une bande proche d'un bord périphérique (24a) disposé au sommet de ladite paroi latérale (24) dudit récipient (16), et **en ce que** ledit appareil comprend une ouverture d'envoi (34) configurée pour avoir une forme toroïdale sensiblement creuse coopérant, lorsque ledit couvercle (14) est dans une position fermée sur ledit récipient (16), avec un bord périphérique (24a) dudit récipient (16) et communiquant avec l'intérieur dudit récipient (16).

2. Appareil autonome selon la revendication 1, **caractérisé en ce que** ladite bande avec lesdits trous traversants (32) s'étend à partir dudit bord périphérique (24a) sur 70%, avantageusement 60%, de la hauteur de ladite paroi latérale (24).

3. Appareil autonome selon la revendication 1 ou 2, **caractérisé en ce que** lesdits trous traversants (32) sont réalisés sur au moins une partie de la paroi de base (22) du conteneur interne (16).

4. Appareil autonome selon l'une quelconque des revendications précédentes, **caractérisé en ce que** lesdits trous traversants (32) sont répartis en rangées se chevauchant et/ou alignées verticalement.

5. Appareil autonome selon la revendication 4, **caractérisé en ce que** lesdites rangées se chevauchant sont parallèles ou décalées les unes par rapport aux autres.

6. Appareil autonome selon l'une quelconque des revendications précédentes, **caractérisé en ce que** lesdits trous traversants (32) ont la même taille les uns que les autres.

7. Appareil autonome selon l'une quelconque des revendications précédentes jusqu'à la revendication 5, **caractérisé en ce que** lesdits trous traversants (32) sont de taille différente les uns des autres.

8. Appareil autonome selon l'une quelconque des revendications précédentes, **caractérisé en ce que** ladite bouche d'aspiration (30) est positionnée en correspondance avec ledit élément générateur de flux d'air (20).

9. Appareil autonome selon la revendication 1, **caractérisé en ce que** ladite ouverture d'envoi (34) présente une fente circonférentielle (36) pour la sortie dudit flux d'air, s'adaptant au bord périphérique (24a) dudit récipient (16).

10. Appareil autonome selon la revendication 9, **caractérisé en ce que** ladite ouverture d'envoi (34) se développe sur une circonférence avec un diamètre plus petit que ledit bord périphérique (24a) en correspondance avec ladite fente circonférentielle (36), et augmente ensuite progressivement.

11. Procédé pour renvoyer un flux d'air à l'intérieur d'un appareil autonome (10) pour cuire des aliments comme dans la revendication 1, ledit appareil comprenant un corps de support (12), dans lequel le corps de support (12) a une paroi externe (12a) et une paroi interne (12b), un couvercle ouvrable (14) articulé sur ledit corps de support (12), un récipient interne (16) qui peut être extrait/inséré par rapport audit corps de support (12) et ouvert au sommet, dans lequel ladite paroi interne (12b) est adjacente pendant l'utilisation audit récipient (16), au moins un dispositif de chauffage (18) et au moins un élément (20) pour générer un flux d'air vers l'intérieur dudit récipient (16), **caractérisé en ce qu'il** permet de :
- chauffer un flux d'air au moyen dudit dispositif de chauffage (18) ;
- faire passer le flux d'air à travers les aliments contenus dans ledit récipient (16) au moyen d'une pluralité de trous traversants (32) réalisés sur au moins une partie de la paroi latérale (24) dudit récipient (16), lesdits trous traversants (32) étant présents au moins partiellement sur ladite paroi latérale (24), en particulier sur une bande proche d'un bord périphérique (24a) disposé au sommet de ladite paroi latérale (24) dudit récipient (16) ;
- éliminer ledit flux d'air sortant de ladite pluralité de trous traversants (32) au moyen d'une sortie de retour (28) avec une bouche d'aspiration (30) réalisée en correspondance avec une paroi interne (12b) dudit corps de support (12).
